# EUROPEAN PATENT SPECIFICATION

(11) **EP 3 243 948 B1**
(45) Date of publication and mention of the grant of the patent: **28.08.2019**
(21) Application number: 17169693.3
(22) Date of filing: 05.05.2017
(51) Int. Cl.: D06F 37/22, F16F 15/36

(54) **WASHING MACHINE AND BALANCING RING FOR WASHING MACHINE**
WASCHMASCHINE UND UNWUCHTAUSGLEICHSVORRICHTUNG FÜR WASCHMASCHINE
MACHINE À LAVER ET DISPOSITIF D'EQUILIBRAGE POUR MACHINE À LAVER

(30) Priority: 12.05.2016 CN 201610310895
(43) Date of publication of application: 15.11.2017
(73) Proprietor: BSH Hausgeräte GmbH, 81739 München (DE)
(72) Inventor: Cui, Xuli, Nanjing, 211000 (CN); Fan, Zongwen, Nanjing, 211000 (CN); Wu, Yancheng, Nanjing City, Baixia District, 210000 (CN); Yuan, Quan, Nanjing, 210000 (CN)

(56) References cited:
- EP-A1- 2 826 908
- WO-A1-2017/009170
- JP-A- H06 300 045
- KR-A- 20080 037 428

## Description

The present invention relates to a washing machine and a balancing mechanism of a washing machine.

A washing machine usually includes a barrel that can be driven by a motor to rotate. Washing and dewatering operations are performed on clothes in the barrel. To balance the barrel in a rotating process, so as to reduce vibration and noise that are generated by unbalanced rotation of the barrel, a balancing ring may be mounted along a circumferential direction on the barrel. The balancing ring generally includes a shell including an annular inner cavity, a mass body, such as a sphere, a sphere group, or a movable body in another shape, capable of moving within the annular inner cavity, and a viscous fluid having a particular lubrication function and providing a viscosity force.

In a dewatering stage, when a rotating speed of the barrel is higher than a resonant rotating speed of the barrel, the mass body within the balancing ring is automatically stabilized at a position opposite to an eccentric mass of clothes, so as to offset the eccentric mass formed by the clothes. In an initial stage of the dewatering and in washing and rinsing stages of a washing program, a rotating speed of the barrel is relatively low, the mass body within the balancing ring relatively moves, and consequently, collision noise is generated.

EP 2 826 908 A1 discloses a balancer of a washing machine. The balancer includes a balancer housing having an annular channel therein, at least one mass movably disposed in the channel at least one groove recessed in an inner surface of the balancer housing so as to accommodate the mass, and at least one magnet coupled to an outer surface of the balancer housing to restrict the mass accommodated in the groove when an RPM of the drum is within a specific RPM range.

KR 2008 0037428 A discloses a frontloading washing machine comprises a rotary tub and balancers. The balancer has a balancer housing, a plurality of masses, and magnets. The balancer housing has an annular lace. The masses are placed in the balancer housings to move along the lace. The magnets are installed at the outer surface of the balancer housing to temporarily fix the mass on the balancer housing. The number of the magnets is the same as that of the masses.

JP H06 300045 A discloses an angular ball bearing that consists of balls made of magnetic body, bearing inner race and a bearing outer race, wherein a pair of bearing outer races having a ring shaped magnet interposed are installed on a bearing house consisting of each nonmagnetic body. A shaft is inserted into the bearing inner race. The ring shaped magnet is magnetized in the axial direction, and the magnetic field which is in an axis symmetry is formed, and arranged at the position where the line of the magnetic force which is in an axis symmetry for each ball passes.

An objective of the present invention is to provide an improved balancing ring for a washing machine, so as to reduce collision noise of a mass body within the balancing ring in a low speed rotation process.

For the foregoing objective, the technical solution used in the present invention is: a balancing ring for mounting along a circumferential direction of a barrel of a washing machine, including a shell including an annular inner cavity, the annular inner cavity including at least two mass bodies capable of moving along the annular inner cavity, where a centripetal side of the mass body is provided with a first magnet, a centripetal side of the shell is provided with an attraction member that can be magnetically attracted, and a magnetic performance of the first magnet is specified in a manner in which when the balancing ring rotates relative to a central axis thereof at a speed lower than a predetermined rotating speed, a magnetic attraction force generated by the first magnet is sufficient for fixing the mass body by means of magnetic attraction forces of the first magnet and the attraction member, and when the balancing ring rotates relative to the central axis thereof at a speed higher than or equal to the predetermined rotating speed, a centrifugal force overcomes the magnetic attraction forces, so that the mass body can move within the annular inner cavity, wherein a centripetal side of the mass body is provided with the first magnet, a centripetal side of the shell is provided with the attraction member, and the attraction member continuously extends along a circumferential direction of the shell. The attraction member may be an inner barrel wall of the washing machine, and the balancing ring is fixed on a radial outer side of the inner barrel wall of washing machine.

When the balancing ring using the foregoing technical solution is stationary or rotates around a central axis at a speed lower than the predetermined rotating speed, the mass body is fixed by the magnetic attraction forces of the first magnet and the attraction member, and the mass body rotates together with the shell of the balancing ring, so that a mutual collision between the mass bodies does not occur. According to another aspect, when the balancing ring rotates around the central axis at a speed higher than or equal to the predetermined rotating speed, a centrifugal force overcomes the magnetic attraction force, so that the mass body can move within the annular inner cavity and move to an appropriate position to achieve balance.

According to an aspect of the present invention, the attraction member is made of iron and a substance including at least iron. For example, the attraction member may be a magnetic iron sheet or may be a common iron sheet without a magnetic property.

Furthermore, the attraction member continuously extends along a circumferential direction of the shell. In this way, the mass body may be fixed at any position along a circumferential direction of an annular channel.

In an implementation manner, the attraction member is fixed on an outer wall of the shell. It is convenient to mount attraction member on the outer wall of the shell, and a cooperation requirement for the shell is relatively low.

In an implementation manner, two ends of each mass body along a circumferential direction of the annular inner cavity are respectively provided with a second magnet and a third magnet, and magnetic poles of outward sides of the second magnet and the third magnet are the same. Therefore, a repellent magnetic force is generated between two adjacent mass bodies, and a shorter distance leads to a greater repulsive force, thereby. avoiding or reducing noise generated by the mass bodies because of a collision in a movement process.

In an implementation manner, a radial width of the annular inner cavity is greater than an overall height of the mass body. Therefore, when the balancing ring rotates relative to the central axis thereof at a speed higher than or equal to the predetermined rotating speed, the mass body may leave the centripetal side of the shell under the action of the centrifugal force and move along the annular inner cavity.

In an implementation manner, the first magnet is connected to the mass body by using a compression spring, so as to move relative to the mass body along a direction of the centrifugal force. Therefore, when the balancing ring rotates relative to the central axis thereof at a speed higher than or equal to the predetermined rotating speed, the first magnet compresses the spring to move away from the attraction member, so as to greatly reduce an impact of a magnetic force in a moving process of the mass body, so that the mass body quickly reaches a balance position.

In an implementation manner, each of the mass bodies includes at least two spheres and a maintaining apparatus that maintains synchronous movement of the at least two spheres, and the first magnet is disposed on the maintaining apparatus. In other implementation manners, the mass body may also be a movable body including a roller.

In an implementation manner, there is a viscous fluid inside the annular inner cavity, and the predetermined rotating speed is specified in a manner in which when the balancing ring is obliquely or vertically disposed and rotates relative to the the central axis thereof at a speed higher than or equal to the predetermined rotating speed, the mass body may be drive by a friction force and the viscous fluid to move to and cross a highest point of the annular inner cavity. In this way, the mass body can continuously move within the annular inner cavity without falling down before reaching the highest point, colliding with an ascending mass body, and generating noise.

The present invention further provides a washing machine, including a barrel that can be driven by a motor to rotate, where the foregoing balancing ring is disposed along a circumferential direction of the barrel.

Preferably, a rotating shaft of the barrel is horizontally or obliquely disposed.

The washing machine is adapted to provide a washing program, the washing program includes a main washing stage, a rinsing stage, and a dewatering stage, and the predetermined rotating speed is higher than a rotating speed of the main washing stage and a rotating speed of the rinsing stage and is lower than a rotating speed of the dewatering stage. Therefore, in the main washing stage and the rinsing stage, the mass body is fixed by magnetic attraction forces of a first magnet and an attraction member, the mass body rotates together with a shell of the balancing ring, and a mutual collision between the mass bodies does not occur.

The present invention is further described below with reference to the accompanying drawings.

The disclosure will become more fully understood from the detailed description given herein below for illustration only, and thus are not limitative of the disclosure, and wherein:
FIG. 1 is a schematic diagram of a washing machine in which a balancing ring is mounted;
FIG. 2 is an overall schematic diagram of a balancing ring;
FIG. 3 is a sectional view of a balancing ring of a first implementation manner; and
FIG. 4 is a partial schematic diagram of a balancing ring of a second implementation manner.

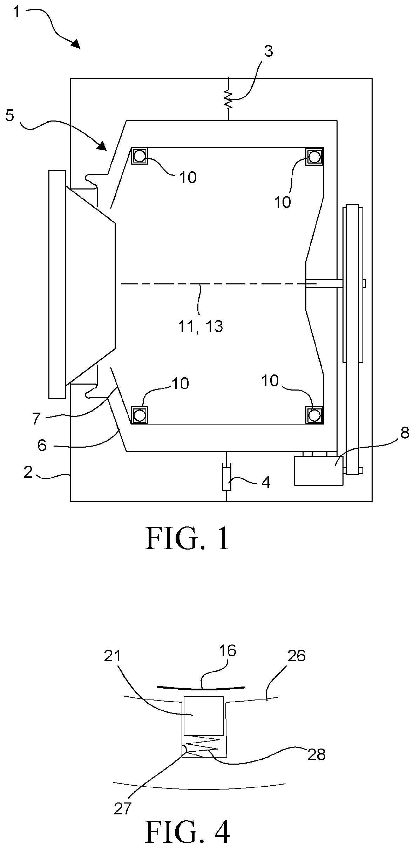

As shown in FIG. 1, a washing machine 1 includes a housing 2 and a drum system 5 that is suspended inside the housing 2 by using a flexible suspending unit 3 and a damping brace unit 4. The drum system 5 includes an outer barrel 6 that is connected to the flexible suspending unit 3 and the damping brace unit 4, an inner barrel 7 that is approximately coaxially mounted inside the outer barrel 6, and a motor 8 that drives the inner barrel 7 to perform rotation motion. A rotating shaft 13 of the inner barrel 7 is approximately horizontal.

Balancing rings 10 are respectively mounted at positions, close to axial end portions on two sides, of the inner barrel 7 along a circumferential direction of a wall of the inner barrel 7. The balancing ring 10 is disposed coaxially with the inner barrel 7 and has a central axis 11. In another alternative implementation manner, the balancing ring 10 may be also disposed only at one end of the inner barrel 7. In addition, the present invention is also applicable to a washing machine whose inner barrel 7 is obliquely disposed so that a rotating shaft 13 thereof inclines relative to a horizontal plane.

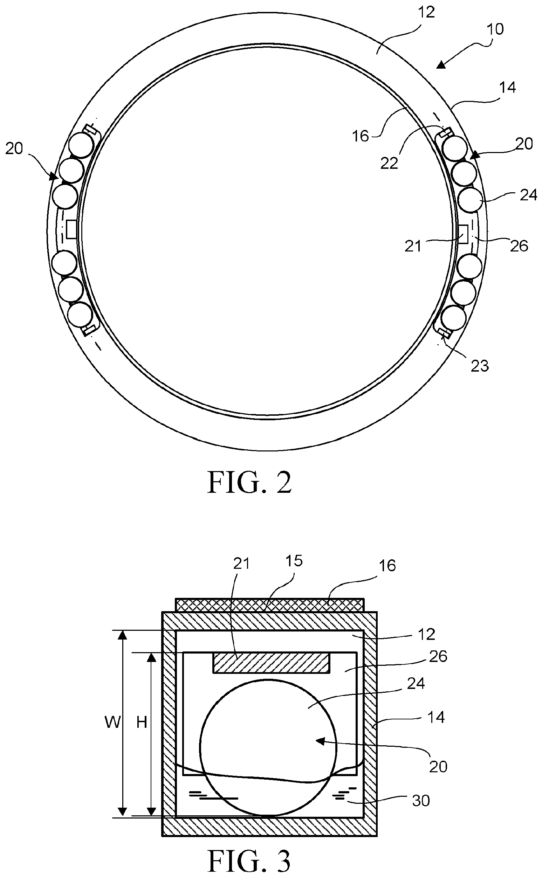

As shown in FIG. 2, the balancing ring 10 includes a shell 14 including an annular inner cavity 12. A circle of iron straps 16 are continuously disposed on an outer wall 15 on a centripetal side of the shell 14. The annular inner cavity 12 includes two groups of mass bodies 20 capable of moving along the annular inner cavity 12. It can be thought of that more than two groups of mass bodies 20 are completely feasible.

It can be known from FIG. 2 and FIG. 3 that there is also a viscous fluid 30 inside the annular inner cavity 12. Each mass body 20 includes multiple spheres 24 and a maintaining apparatus 26 that maintains synchronous movement of the spheres 24. A centripetal side, that is, a side facing the iron straps 16, of the maintaining apparatus 26 is provided with a first magnet 21. Therefore, a magnetic force generated by the first magnet 21 can attract the mass body 20 onto the iron straps 16 through the shell 14.

A radial width W of the annular inner cavity 12 is greater than an overall height H of the mass body 20. Therefore, when a magnetic attraction force of the first magnet 21 is overcome by a centrifugal force, the mass body 20 may leave an inner wall on a centripetal side of the shell 14 and fall onto an inner wall of a side, distal from the central axis 11 of the balancing ring, of the shell 14.

To control a moment at which the mass body 20 is released, for example, the mass body 20 needs to be maintained on the shell 14 in a main washing stage and a rinsing stage, in which with a rotating speed is relatively low, of a washing program, and the mass body 20 needs to be released before a highest rotating speed is reached in a dewatering stage, to move the mass body 20 to a position for balancing the washing load, so that a magnetic performance of the first magnet 21 is specified in advance. The magnetic performance of the first magnet 21 is specified in a manner in which when the balancing ring 10 rotates relative to the central axis 11 thereof at a speed lower than a predetermined rotating speed, a magnetic attraction force generated by the first magnet 21 is sufficient for fixing the mass body 20 by means of magnetic attraction forces of the first magnet 21 and the iron straps 16, and when the balancing ring 10 rotates relative to the central axis 11 thereof at a speed higher than or equal to the predetermined rotating speed, a centrifugal force overcomes the magnetic attraction force, and the mass body 20 can move within the annular inner cavity 12.

The predetermined rotating speed is higher than a rotating speed of the main washing stage and a rotating speed of the rinsing stage and is less than a rotating speed of the dewatering stage. The rotating speed of the dewatering stage refers to a rotating speed of the inner barrel 7 when the rotating speed of the inner barrel 7 gradually rises and is stabilized at a highest rotating speed in the dewatering stage. When the washing machine provides multiple highest dewatering rotating speeds, for example, 800 r/min, 1000 r/min, and 1200 r/min, the predetermined rotating speed is lower than a lowest dewatering rotating speed. For example, a speed that is lower than 800 r/min is selected from the foregoing instances. In addition, when the balancing ring 10 relative to the the central axis 11 thereof rotates at a speed higher than or equal to the predetermined rotating speed, the mass body 20 can be driven by a friction force and the viscous fluid to move to and cross a highest point of the annular inner cavity 12.

In addition, two ends of each maintaining apparatus 26 along a circumferential direction of the annular inner cavity 12 are respectively provided with a second magnet 22 and a third magnet 23, and magnetic poles of outward sides of the second magnet 22 and the third magnet 23 are the same. For example, both are S poles or both are N poles.

In the implementation manner shown in FIG. 4, the maintaining apparatus 26 includes a groove 27, and a compression spring 28 is disposed on the bottom of the groove 27. The first magnet 21 is connected to the maintaining apparatus 26 by using the compression spring 28. When leaving an inner wall of the annular inner cavity 12 under the action of the centrifugal force, the first magnet 21 compresses the spring 28 along a centrifugal force direction, and is embedded into the groove 27, so as to move away from the iron straps 16.

Various specific implementation manners described in the above and shown in accompanying drawings are only used to illustrate the present invention instead of representing the entirety of the present invention. Within the scope of the basic technical concept of the present invention, modifications in any form made by persons of ordinary skill in the art to the present invention all fall within the protection scope of the present invention, as defined by the appended claims.

## Claims

1. A balancing ring (10) for mounting along a circumferential direction on a barrel (7) of a washing machine (1), comprising a shell (14) comprising an annular inner cavity (12), the annular inner cavity (12) comprising at least two mass bodies (20) capable of moving along the annular inner cavity (12), and magnetic performance of a first magnet (21) is specified in a manner in which when the balancing ring (10) rotates relative to a central axis (11) thereof at a speed lower than a predetermined rotating speed, a magnetic attraction force generated by the first magnet (21) is sufficient for fixing the mass body (20) by means of magnetic attraction forces of the first magnet (21) and an attraction member (16) that can be magnetically attracted, and when the balancing ring (10) rotates relative to the central axis (11) thereof at a speed higher than or equal to the predetermined rotating speed, a centrifugal force overcomes the magnetic attraction force, so that the mass body (20) can move within the annular inner cavity (11), **characterized in that** a centripetal side of the mass body (20) is provided with the first magnet (21), a centripetal side of the shell is provided with the attraction member (16) and the attraction member (16) continuously extends along a circumferential direction of the shell (14).

2. The balancing ring (10) according to claim 1, **characterized in that** the attraction member (16) is made of iron and a substance comprising at least iron.

3. The balancing ring (10) according to claim 1, **characterized in that** the attraction member (16) is fixed on an outer wall (15) of the shell (14).

4. The balancing ring according to claim 1, **characterized in that** two ends of each mass body (20) along a circumferential direction of the annular inner cavity (12) are respectively provided with a second magnet (22) and a third magnet (23), and magnetic poles of outward sides of the second magnet (22) and the third magnet (23) are the same.

5. The balancing ring according to claim 1, **characterized in that** a radial width (W) of the annular inner cavity (12) is greater than an overall height (H) of the mass body (20).

6. The balancing ring (10) according to claim 1, **characterized in that** the first magnet (21) is connected to the mass body (20) by using a compression spring (28), so as to move relative to the mass body (20) along a centrifugal force direction.

7. The balancing ring (10) according to claim 1, **characterized in that** each of the mass bodies (20) comprises at least two spheres (24) and a maintaining apparatus (26) that maintains synchronous movement of the at least two spheres (24), and the first magnet (21) is disposed on the maintaining apparatus (26).

8. The balancing ring (10) according to claim 1, **characterized in that** there is a viscous fluid (30) inside the annular inner cavity (12), and the predetermined rotating speed is specified in a manner in which when the balancing ring (10) is obliquely or vertically disposed and rotates relative to the central axis (11) thereof at a speed higher than or equal to the predetermined rotating speed, the mass body (20) may be driven by a friction force and the viscous fluid to move to and cross a highest point of the annular inner cavity (12).

9. A washing machine (1), comprising a barrel (7) that can be driven by a motor (8) to rotate, **characterized in that** the balancing ring (10) according to any one of the foregoing claims is disposed along a circumferential direction of the barrel (7).

10. The washing machine (1) according to claim 9, **characterized in that** a rotating shaft (13) of the barrel (7) is horizontally or obliquely disposed.

11. The washing machine (1) according to claim 9, **characterized in that** the washing machine (1) is adapted to provide a washing program, the washing program comprises a main washing stage, a rinsing stage, and a dewatering stage, and the predetermined rotating speed is higher than a rotating speed of the main washing stage and a rotating speed of the rinsing stage and is lower than a rotating speed of the dewatering stage.

## Patentansprüche

1. Auswuchtring (10) zur Anbringung entlang einer Umfangsrichtung auf einer Trommel (7) einer Waschmaschine (1), welcher einen Mantel (14) umfasst, der einen ringförmigen inneren Hohlraum (12) umfasst, wobei der ringförmige innere Hohlraum (12) wenigstens zwei Massenkörper (20) umfasst, die in der Lage sind, sich entlang des ringförmigen inneren Hohlraums (12) zu bewegen, wobei die magnetischen Eigenschaften eines ersten Magneten (21) auf eine solche Weise festgelegt sind, dass, wenn sich der Auswuchtring (10) relativ zu einer Mittelachse (11) desselben mit einer Geschwindigkeit dreht, die niedriger als eine vorbestimmte Drehgeschwindigkeit ist, eine von dem ersten Magneten (21) erzeugte magnetische Anziehungskraft ausreichend ist, um den Massenkörper (20) mittels magnetischer Anziehungskräfte des ersten Magneten (21) und eines Anziehungselements (16), welches magnetisch angezogen werden kann, zu fixieren, und wenn sich der Auswuchtring (10) relativ zu der Mittelachse (11) desselben mit einer Geschwindigkeit dreht, die höher oder gleich der vorbestimmten Drehgeschwindigkeit ist, eine Zentrifugalkraft die magnetische Anziehungskraft überwindet, so dass sich der Massenkörper (20) innerhalb des ringförmigen inneren Hohlraums (11) bewegen kann, **dadurch gekennzeichnet, dass** eine zentripetale Seite des Massenkörpers (20) mit dem ersten Magneten (21) versehen ist, eine zentripetale Seite des Mantels mit dem Anziehungselement (16) versehen ist und das Anziehungselement (16) sich durchgehend entlang einer Umfangsrichtung des Mantels (14) erstreckt.

2. Auswuchtring (10) nach Anspruch 1, **dadurch gekennzeichnet, dass** das Anziehungselement (16) aus Eisen und einem Stoff, welcher wenigstens Eisen umfasst, hergestellt ist.

3. Auswuchtring (10) nach Anspruch 1, **dadurch gekennzeichnet, dass** das Anziehungselement (16) an einer Außenwand (15) des Mantels (14) befestigt ist.

4. Auswuchtring nach Anspruch 1, **dadurch gekennzeichnet, dass** zwei Enden jedes Massenkörpers (20) entlang einer Umfangsrichtung des ringförmigen inneren Hohlraums (12) mit einem zweiten Magneten (22) bzw. einem dritten Magneten (23) versehen sind und Magnetpole von nach außen gerichteten Seiten des zweiten Magneten (22) und des dritten Magneten (23) dieselben sind.

5. Auswuchtring nach Anspruch 1, **dadurch gekennzeichnet, dass** eine radiale Breite (W) des ringförmigen inneren Hohlraums (12) größer als eine Gesamthöhe (H) des Massenkörpers (20) ist.

6. Auswuchtring (10) nach Anspruch 1, **dadurch gekennzeichnet, dass** der erste Magnet (21) mit dem Massenkörper (20) unter Verwendung einer Druckfeder (28) verbunden ist, um sich relativ zu dem Massenkörper (20) in einer Zentrifugalkraftrichtung zu bewegen.

7. Auswuchtring (10) nach Anspruch 1, **dadurch gekennzeichnet, dass** jeder der Massenkörper (20) wenigstens zwei Kugeln (24) und eine Aufrechterhaltungsvorrichtung (26), welche eine synchrone Bewegung der wenigstens zwei Kugeln (24) aufrechterhält, umfasst und der erste Magnet (21) auf der Aufrechterhaltungsvorrichtung (26) angeordnet ist.

8. Auswuchtring (10) nach Anspruch 1, **dadurch gekennzeichnet, dass** ein viskoses Fluid (30) innerhalb des ringförmigen inneren Hohlraums (12) vorhanden ist und die vorbestimmte Drehgeschwindigkeit auf eine solche Weise festgelegt ist, dass, wenn der Auswuchtring (10) schräg oder vertikal angeordnet ist und sich relativ zu der Mittelachse (11) desselben mit einer Geschwindigkeit dreht, die höher oder gleich der vorbestimmten Drehgeschwindigkeit ist, der Massenkörper (20) von einer Reibungskraft und dem viskosen Fluid so getrieben werden kann, dass er sich zu einem höchsten Punkt des ringförmigen inneren Hohlraums (12) bewegt und diesen überquert.

9. Waschmaschine (1), die eine Trommel (7) umfasst, welche von einem Motor (8) drehend angetrieben werden kann, **dadurch gekennzeichnet, dass** der Auswuchtring (10) nach einem der vorhergehenden Ansprüche in einer Umfangsrichtung der Trommel (7) angeordnet ist.

10. Waschmaschine (1) nach Anspruch 9, **dadurch gekennzeichnet, dass** eine rotierende Welle (13) der Trommel (7) horizontal oder schräg angeordnet ist.

11. Waschmaschine (1) nach Anspruch 9, **dadurch gekennzeichnet, dass** die Waschmaschine (1) dafür ausgelegt ist, ein Waschprogramm bereitzustellen, wobei das Waschprogramm einen Hauptwaschgang, einen Spülgang und einen Schleudergang umfasst und die vorbestimmte Drehgeschwindigkeit höher als eine Drehgeschwindigkeit des Hauptwaschgangs und eine Drehgeschwindigkeit des Spülgangs ist und niedriger als eine Drehgeschwindigkeit des Schleudergangs ist.

## Revendications

1. Anneau d'équilibrage (10) à monter le long d'une direction circonférentielle sur une cuve (7) d'un lave-linge (1), comprenant une coque (14) comprenant une cavité intérieure annulaire (12), la cavité intérieure annulaire (12) comprenant au moins deux corps de masse (20) capables de se déplacer le long de la cavité intérieure annulaire (12), et la performance magnétique d'un premier aimant (21) est spécifiée d'une façon selon laquelle lorsque l'anneau d'équilibrage (10) tourne par rapport à un axe central (11) de celui-ci à une vitesse inférieure à une vitesse de rotation prédéterminée, une force d'attraction magnétique générée par le premier aimant (21) est suffisante pour fixer le corps de masse (20) au moyen de forces d'attraction magnétiques du premier aimant (21) et un élément d'attraction (16) qui peut être attiré magnétiquement, et lorsque l'anneau d'équilibrage (10) tourne par rapport à un axe central (11) de celui-ci à une vitesse supérieure ou égale à la vitesse de rotation prédéterminée, une force centrifuge excède la forme d'attraction magnétique, de sorte que le corps de masse (20) peut se déplacer à l'intérieur de la cavité intérieure annulaire (11), **caractérisé en ce qu'**un côté centripète du corps de masse (20) est doté du premier aimant (21), un côté centripète de la coque est doté de l'élément d'attraction (16) et l'élément d'attraction (16) s'étend en continu le long d'une direction circonférentielle de la coque (14).

2. Anneau d'équilibrage (10) selon la revendication 1, **caractérisé en ce que** l'élément d'attraction (16) est fabriqué en fer et en une substance comprenant au moins du fer.

3. Anneau d'équilibrage (10) selon la revendication 1, **caractérisé en ce que** l'élément d'attraction (16) est fixé sur une paroi extérieure (15) de la coque (14).

4. Anneau d'équilibrage selon la revendication 1, **caractérisé en ce que** deux extrémités de chaque corps de masse (20) le long d'une direction circonférentielle de la cavité intérieure annulaire (12) sont respectivement dotées d'un deuxième aimant (22) et d'un troisième aimant (23), et les pôles magnétiques des côtés extérieurs du deuxième aimant (22) et du troisième aimant (23) sont identiques.

5. Anneau d'équilibrage selon la revendication 1, **caractérisé en ce qu'**une largeur radiale (W) de la cavité intérieure annulaire (12) est supérieure à une hauteur hors tout (H) du corps de masse (20).

6. Anneau d'équilibrage (10) selon la revendication 1, **caractérisé en ce que** le premier aimant (21) est relié au corps de masse (20) en utilisant un ressort de compression (28), de sorte à se déplacer par rapport au corps de masse (20) le long d'une direction de la force centrifuge.

7. Anneau d'équilibrage (10) selon la revendication 1, **caractérisé en ce que** chacun des corps de masse (20) comprend au moins deux sphères (24) et un dispositif de maintien (26) qui maintient le mouvement synchrone d'au moins deux sphères (24), et le premier aimant (21) est disposé sur le dispositif de maintien (26).

8. Anneau d'équilibrage (10) selon la revendication 1, **caractérisé en ce qu'**un fluide visqueux (30) se trouve dans la cavité intérieure annulaire (12), et la vitesse de rotation prédéterminée est spécifiée d'une façon selon laquelle lorsque l'anneau d'équilibrage (10) est disposé en oblique ou à la verticale et tourne par rapport à l'axe central (11) de celui-ci à une vitesse supérieure ou égale à la vitesse de rotation prédéterminée, le corps de masse (20) peut être entraîné par une force de friction et le fluide visqueux forcé à se déplacer vers et à traverser un point le plus élevé de la cavité intérieure annulaire (12).

9. Lave-linge (1), comprenant une cuve (7) qui peut être entraînée en rotation par un moteur (8), **caractérisé en ce que** l'anneau d'équilibrage (10) selon l'une quelconque des revendications précédentes est disposé le long d'une direction circonférentielle de la cuve (7).

10. Lave-linge (1) selon la revendication 9, **caractérisé en ce qu'**un arbre rotatif (13) de la cuve (7) est disposé à l'horizontale ou en oblique.

11. Lave-linge (1) selon la revendication 9, **caractérisé en ce que** le lave-linge (1) est adapté afin de fournir un programme de lavage, le programme de lavage comprend une étape de lavage principale, une étape de rinçage et une étape d'essorage, et la vitesse de rotation prédéterminée est supérieure à une vitesse de rotation de l'étape de lavage principale et une vitesse de rotation de l'étape de rinçage et est inférieure à une vitesse de rotation de l'étape d'essorage.
